# EUROPÄISCHE PATENTSCHRIFT

(11) **EP 1 340 122 B1**
(45) Veröffentlichungstag und Bekanntmachung des Hinweises auf die Patenterteilung: **06.09.2006**
(21) Anmeldenummer: 01995576.4
(22) Anmeldetag: 04.12.2001
(51) Int. Cl.: G02F 1/35, G02F 1/39, G02F 1/313, G02F 1/05

(54) **OPTISCHES SYSTEM**
OPTICAL SYSTEM
SYSTEME OPTIQUE

(30) Priorität: 05.12.2000 DE 10060232
(43) Veröffentlichungstag der Anmeldung: 03.09.2003
(73) Patentinhaber: Fraunhofer-Gesellschaft zur Förderung der angewandten Forschung e.V., 80686 München (DE)
(72) Erfinder: PERTSCH, Thomas, 07629 Hermsdorf (DE); PESCHEL, Ulf, 07745 Jena (DE); BRÄUER, Andreas, 07646 Schlöben (DE); LEDERER, Falk, 07546 Gera (DE)
(74) Vertreter: Pfenning, Meinig & Partner GbR
(86) Internationale Anmeldenummer: PCT/DE2001/004580
(87) Internationale Veröffentlichungsnummer: WO 2002/046837

(56) Entgegenhaltungen:
- O.BANG, P.D.MILLER : "Exploiting discreteness for switching in waveguide arrays" OPTICS LETTERS, Bd. 21, Nr. 15, 1. August 1996 (1996-08-01), Seiten 1105-1107, XP002208605
- W.KROLIKOWSKI, Y.S.KIVSHAR: "Soliton-based optical switching in waveguide arrays" JOURNAL OF THE OPTICAL SOCIETY OF AMERICA B, Bd. 13, Nr. 5, Mai 1996 (1996-05), Seiten 876-887, XP002208606
- KOBYAKOV A ET AL: "Stable discrete domain walls and quasi-rectangular solitons in quadratically nonlinear waveguide arrays" JOURNAL OF THE OPTICAL SOCIETY OF AMERICA B (OPTICAL PHYSICS), OCT. 1999, OPT. SOC. AMERICA, USA, Bd. 16, Nr. 10, Seiten 1737-1742, XP002208607 ISSN: 0740-3224
- SANTOS MARIA C ET AL: "Beam steering and routing in quadratic nonlinear media" PROCEEDINGS OF THE 1997 CONFERENCE ON QUANTUM ELECTRONICS AND LASER SCIENCE, QELS;BALTIMORE, MD, USA MAY 18-23 1997, Bd. 12, 1997, Seite 171 XP002208608 Conf Quant Electron Laser Sci QELS Tech Dig Ser;Conference on Quantum Electronics and Laser Science (QELS) - Technical Digest Series 1997 IEEE, Piscataway, NJ, USA
- EDS.: S.TRILLO, W.TORRUELLAS: "Optical SOLITONS " 2000 , SPRINGER VERLAG , BERLIN XP008002090 in der Anmeldung erwähnt F.Lederer, J.S. Aitchison: "Discrete solitons in nonlinear waveguide arrays", Seite 349 - 365 * Abschnitt 5 *
- FUJIMURA M.; SUHARA T.; NISHIHARA H.: 'Periodically-Poled LiNbO3 Waveguide Devices for Short-Wavelength Light Generation' PROCEEDINGS OF THE LASERS AND ELECTRO-OPTICS SOCIETY ANNUAL MEETING 10 November 1997, Seiten 108 - 109

## Beschreibung

Die Erfindung betrifft ein Verfahren zum Betreiben eines optischen Systems zur opto-optischen Informationsverarbeitung, das auf dem Gebiet der integrierten Optik und insbesondere für das lichtgesteuerte Schalten, Verzweigen von Licht und die Regeneration optischer Signale in Kommunikationsnetzen eingesetzt werden kann.

Wir leben in einer Zeit der "Informationsrevolution", in der der Zugang und die Übertragung von Informationen auch dem normalen Bürger zugänglich wird. Die Nachfrage nach Informationen wächst dabei exponentiell. Als Reaktion auf diese gestiegene Nachfrage wurden im Verlauf der letzten zehn Jahre weltweit moderne optische Faserkommunikationsnetze installiert. Heutige Netzwerke basieren auf elektronischen Schaltern, Frequenzkonvertern, Regeneratoren und Verteilern, welche durch optische Faserkabel verbunden sind. Durch die Nutzung von Wavelength division multiplexing (WDM) nähert sich heute die transatlantische Übertragungskapazität einer einzelnen Faser der magischen Marke von einem Terrabit je Sekunde. Das Fehlen von ultraschnellen Netzwerktechnologien verhindert jedoch, daß diese enorme Übertragungskapazität auch dem Endverbraucher zur Verfügung steht. Die elektronischen Elemente am Ende jeder Faser müßten imstande sein, den gesamten ankommenden Datenverkehr zu verarbeiten. Dies ist sehr ineffizient, da große Teile des einlaufenden Datenstroms lediglich zu anderen Zielen weitergeleitet werden brauchen. Dieser Flaschenhals kann nur durch rein-optische Netzwerke aufgelöst werden, in denen die Informationen durchweg in der Form optischer Signale bleiben und auch optisch verarbeitet werden. Dieses beinhaltet Operationen zur optischen Signallenkung, Signalauswertung, Schaltung, Demultiplexing, und 3R Signalgeneration (retiming, reshaping, reamplification). Dafür wurden beispielsweise verschiedene Verteilungsschemata vorgeschlagen, die z.B. eine Wellenlängenkodierung oder einen Code am Anfang jedes Datenblocks zur Realisierung von Packet Swichting beinhalten. Diese reinoptischen Konzepte sind insbesondere dann sehr aussichtsreich, wenn ihre Realisierung in kleinen Dimensionen, z.B. auf Wellenleiterbasis, möglich ist. Das Basisschaltelement muß dabei eine schnelle Kontrolle des optischen Eingangssignals, wie z.B. Schalten, Konvertieren und Verteilen, durch ein vorzugsweise ebenfalls optisches Kontrollsignal ermöglichen.

Kommerziell verfügbare Geräte, wie z.B. elektromechanische Mikrosysteme, können für Weiterleitung und Demultiplex eingesetzt werden, beinhalten aber elementare Grenzen bezüglich ihrer höchstmöglichen Datenverarbeitungskapazität. Netzwerkarchitekturen, welche auf elektronischen Geräten zur Signalregeneration, Weiterleitung und Demultiplexen beruhen, werden mit steigender Netzkomplexität zunehmend ineffizient, da sie für die Verarbeitung des gesamten eingehenden Datenstroms ausreichend vielseitig sein müssen. Weil dabei jedes Datenpaket verarbeitet werden muß, gleichwohl die Mehrzahl der Pakete nur auf der Durchreise zu anderen Netzwerkzielen ist, beinhaltet dieses Konzept ähnlich beschränkende Faktoren.

Es ist mittlerweile klar, daß rein optische Komponenten, welche effizient das Netzwerk steuern können, das höchste Potential für die Bewältigung des permanent steigenden Datenverkehrsaufkommens besitzen. Dabei müssen effiziente rein optische Netzwerke optisch transparente Elemente für Signalschaltung, Weiterleitung, Wellenlängenmanagement und Regeneration enthalten. Diese Herangehensweise erfordert offensichtlich zu ihrer Realisierung den Einsatz der nichtlinearen Optik. Der nichtlineare optische Grundbaustein muß es erlauben mit der Hilfe eines Kontrollichtstrahles ultraschnell einen einlaufenden Lichtdatenstrom zu manipulieren. Dabei hat der Datenstrom charakteristischer Weise eine niedrige Spitzenleistung von lediglich einigen mW, eine ebenso geringe Bitenergie von einigen fJ sowie eine große spektrale Bandbreite von einigen 10 nm.

Bisher basieren die vielversprechendsten Schalt- und Demultiplexlösungen auf Sagnac-Interferometern. Dabei können verschiedene nichtlineare Mechanismen genutzt werden, um das Sagnac-Gate zu realisieren. Eine Option ist es, die niedrige aber quasi-instantane Kerr-Nichtlinearität in Silicatglasfasern auszunutzen ((NOLM - nonlinear optical loop mirror) [N.J. Doran and D. Wood, Opt. Lett. 13, 56 (1988)]). Faserbasierende Elemente benötigen jedoch untolerierbar große Faserlängen, was Schwierigkeiten bei deren praktischer Nutzung bezüglich der Systemintegration und Stabilität mit sich bringt. Bemühungen zur Nutzung von Chalgogenit-Gläsern, welche eine höhere Nichtlinearität aufweisen, scheiterten wegen der auftretenden Materialinstabilitäten und den erhöhten Verlusten [K. Uchiyama et al., Electron. Lett. 32, 1601 (1996]. Die Modifikation des NOLM-Konzepts zum verstärkenden Faserspiegel (nonlinear amplifiying loop mirrors - NALM) erfordert, daß zusätzlich eine Erbium-Dotierung in die Fasern eingebracht werden muß, welche durch zusätzliche Lichtquellen angeregt werden muß, die erhöhte Kosten verursacht, die Responsezeiten verlängert und zusätzliches Rauschen einfügt [D.J. Richardson, R.J. Laming and D.N. Payne, Opt. Lett. 26, 1779, (1990)].

Ein bisheriger Durchbruch wurde erst mit der Entdekkung erzielt, daß aktive Halbleiterelemente, in welche auf elektrischem Weg freie Ladungsträger injiziert werden (optische Halbleiterverstärker - semiconductor optical amplifiers - SOA), große optische Nichtlinearitäten aufweisen, welche wiederum in Sagnac-Gates für Hochgeschwindigkeitsschalter eingesetzt werden können [A.D. Ellis and D.M. Spirit, Electron. Lett. 29, 2115 (1993)]. In den letzten Jahren wurde die Umsetzung dieses Konzeptes stetig bezüglich einer Erweiterung der Funktionalität (Schalten, Demultiplexen und Signalregeneration), bezüglich der Integration in Chip-Dimensionen und bezüglich der Verarbeitungsraten verbessert [D. Cotter et al., Science, 286, 1523 (1999)]. Verarbeitungskapazitäten von 80 Gbit/s mit Kontrollpulsenergien von ca. 200 fJ scheinen heute realisierbar [A.E. Kelly et al., Electron. Lett. 35, 1477 (1999)]. Obwohl dieses Konzept momentan sehr vielversprechend erscheint, ist dennoch die schnellstmögliche Schaltzeit limitiert durch die Zeit welche notwendig ist, ein Equilibrium der Fermi-Dirac-Verteilung auszubilden, wovon man annimmt das dies etwa 5 ps entspricht. Außerdem hat das Konzept noch einige weitere inhärente Nachteile, welche durch die Eigenschaften des SOA verursacht sind. Dies sind z.B. der limitierte Signal-Rauschabstand, der so genannte Patterneffekt, welcher durch die Sättigung der Verstärkungswirkung hervorgerufen wird und Schaltfehler bei hochgradig irregulären Datenströmen erzeugt, die limitierte Bandbreite für die Frequenzkonversion und die schlechte Kompatibilität mit der Fasergeometrie der Übertragungsleitungen.

Des Weiteren ist von O. Bang und P. D. Miller in "Exploiting discreteness for switching in waveguide arrays"; OPTICS LETTERS; Band 21, Nummer 15; 1. August 1996, Seiten 1105 bis 1107 eine Lösung für einen optischen Schalter in Wellenleiterarrays beschrieben, wobei ein Solitonenstrahl durch Wellenleiter gerichtet wird.

Außerdem sind periodisch gepolte LiNbO₃ Wellenleiterarrays von M. Fujimura, T. Suhara, H. Nishihara in "Periodically-Poled LiNbO₃ Waveguide Devices for Short-Wavelenght Light Generation"; Proceedings of the Lasers and Electro-Optics Annual Meeting; 10.-13. Nov. 1997 beschrieben.

In Anbetracht dieser ungelösten Probleme bietet sich eine innovative Alternative für die rein optische Signalverarbeitung an.

Es ist daher Aufgabe der Erfindung ein Verfahren zum Betreiben eines optischen Systems zur Verfügung zu stellen, mit dem optische Signale einfach bzw. flexibel verarbeitet werden können.

Erfindungsgemäß wird diese Aufgabe mit einem Verfahren, das die Merkmale des Anspruchs 1 aufweist, gelöst. Vorteilhafte Ausgestaltungen und Weiterbildungen der Erfindung können mit den in den untergeordneten Ansprüchen bezeichneten Merkmalen erreicht werden.

Die Erfindung verwendet für die opto-optische Informationsverarbeitung ein Wellenleiterarray, bei dem die einzelnen Wellenleiter evaneszent gekoppelt sind.

Die Anzahl der einzelnen Wellenleiter für ein im optischen System verwendeten Wellenleiterarrays ist nahezu beliebig und kann ohne weiteres auf die jeweilige Applikation angepaßt werden.

In ein solches Wellenleiterarray wird von einer Seite mindestens ein Signalstrahl, dessen Wellenlänge bekannt ist, eingekoppelt. Hierzu wird er mit einem Winkel zur Einkopplung auf das Wellenleiterarray gerichtet, bei dem eine Beugung vermieden werden kann. Dies bedeutet, daß beim Durchqueren eines so eingekoppelten Signalstrahles durch das Wellenleiterarray nahezu keine Strahlverbreiterung zu verzeichnen ist und ein unbeeinflußter so in das Wellenleiterarray eingekoppelter Signalstrahl aus anderen Wellenleitern ausgekoppelt wird, als dem bzw. denen in den der gleiche Signalstrahl eingekoppelt worden ist.

Der Winkel mit dem eine Beugung des Signalstrahls innerhalb des Wellenleiterarrays vermieden werden kann, liegt bei den üblicherweise für die Signalübertragung genutzten Wellenlängen und den Brechungsidizes der Wellenleitermaterialien im Bereich von ca. 1°, so daß der Signalstrahl leicht gegenüber den parallel zueinander ausgerichteten Wellenleitern verkippt ist. Zur Vermeidung der unerwünschten Beugung ist bei der Einstellung des Winkels, mit der der jeweilige Signalstrahl in das Wellenleiterarray eingekoppelt wird, die Phasendifferenz von π/2 zwischen benachbarten Wellenleitern zu berücksichtigen.

Zur Erzielung des eigentlichen erfindungsgemäßen Effektes ist mindestens ein zusätzlicher Kontrollstrahl erforderlich, der ebenfalls in das Wellenleiterarray eingekoppelt wird. Dabei erfolgt die Einkopplung des mindestens einen Kontrollstrahls so, daß der jeweilige Signalstrahl innerhalb des Wellenleiterarrays vom Kontrollstrahl durchkreuzt wird, so daß die Photonen des Kontrollstrahls mit den Photonen des Signalstrahls wechselwirken und eine Beeinflussung des Signalstrahls erreicht werden kann, wobei auf entsprechende Beispiele für eine solche Beeinflussung nachfolgend noch zurückzukommen sein wird.

Der Signalstrahl weist eine bekannte Wellenlänge auf und ist in der Regel in bestimmter Taktfrequenz gepulst und Träger binärer Informationen. Aus sicherheitstechnischen Gründen können bei der optischen Signalübertragung nur begrenzte Leistungen eingesetzt werden. Bei der Übertragung treten bekanntermaßen auch Verluste auf, so daß das Signalrausch-Verhältnis verschlechtert ist. Hier kann mit der erfindungsgemäßen Lösung eine Verbesserung erreicht werden, in dem eine entsprechende Verstärkung des Signalstrahlanteils durch Übertragung von Photonenenergie vom Kontrollstrahl erreicht wird.

Vorteilhaft kann der Kontrollstrahl auch zeitlich strukturiert sein, d.h. er wird mit einer entsprechenden Taktfrequenz gepulst in das Wellenleiterarray eingekoppelt, so daß eine solche Verstärkung synchron zur Signalübertragungsimpulsfolge erreichbar ist (retiming).

Das erfindungsgemäße optische System kann vorteilhaft ein Wellenleiterarray aus einem quadratisch nichtlinearen Material verwenden. So kann vorteilhaft Lithiumniobat mit Wellenleitern, die aus eindiffundiertem Titan oder durch Protonenaustausch gebildet worden sind, eingesetzt werden. Solche Wellenleiterarrays sind an sich bekannt. Besonders vorteilhaft sind diese Wellenleiterleiterarrays in periodischer Form gepolt, wobei die Polung in Ausbreitungsrichtung des Lichts durch das Wellenleiterarray alternierend wechselt. Die Ausbildung einer solchen alternierend wechselnden Polung ist ebenfalls an sich bekannt.

Vorteilhafterweise werden für den einen bzw. auch mehrere Kontrollstrahl(e) andere Wellenlängen und demzufolge auch andere Frequenzen eingesetzt. Hierdurch kann eine gezielte nichtlineare Wellenlängen- und Frequenzwandlung des aus dem Wellenleiter austretenden Lichtstrahls erreicht werden, die nicht mit einer der beiden Wellenlängen von Signalstrahl und Kontrollstrahl übereinstimmen muß.

So kann beispielsweise die Wellenlänge des jeweiligen Signalstrahls doppelt so groß, wie die Wellenlänge des Kontrollstrahls sein, wodurch sich durch den entsprechend kurzwelligen Kontrollstrahl günstigere Beugungsverhältnisse im Wellenleiterarray ergeben, d.h. es tritt keine Beugung auf.

Die Art und Weise der Wechselwirkung von Signalstrahl mit Kontrollstrahlen kann im Wesentlichen durch den Kontrollstrahl beeinflußt werden, so ist es möglich, ausgehend vom Kreuzungspunkt von Signal- und Kontrollstrahl eine symmetrische Verzweigung des Signalstrahls und eines Idlerstrahls zu erzielen. Werden aber zwei gleiche oder ein Kontrollstrahl in zwei benachbarte Wellenleiter eingekoppelt, die den Signalstrahl nahezu gleich kreuzen, können eine Unterdrükkung eines Idlerstrahls und der bereits erwähnte Verstärkung des Signalstrahls erreicht werden.

Die Kontrollstrahlen können bevorzugt parallel in Bezug zu den einzelnen Wellenleitern des Wellenleiterarrays in das Wellenleiterarray, also mit einem Winkel von 0° in das Wellenleiterarray eingekoppelt werden. Die Einhaltung dieses Winkels ist aber nicht zwingend erforderlich, sondern es muß lediglich gesichert sein, daß sowohl Signal-, wie auch Kontrollstrahl beugungsfrei im und durch das Wellenleiterarray geführt werden und sich dabei innerhalb des Wellenleiterarrays kreuzen.

Was die konstanten Einkopplungsbedingungen des Signalsstrahls und insbesondere den Einkopplungswinkel und die Einkopplungsposition in das Wellenleiterarray betrifft, besteht eine Einflußnahmemöglichkeit darin, eine bestimmte Position des Kreuzungspunktes mit dem Kontrollstrahl auszuwählen, so daß die Position des aus dem Wellenleiterarray ausgekoppelten Lichtstrahls dadurch beeinflußt werden kann.

In relativ einfacher Form kann dies dadurch erreicht werden, daß ein oder mehrere Kontrollstrahlen, im letztgenannten Fall auf möglichst eng benachbarte Wellenleiter des Wellenleiter gerichtet und dort in das Wellenleiterarray eingekoppelt werden, so daß bei bekannten und gleichbleibenden Einkopplungsbedingungen des Signalstrahls ein bestimmter Kreuzungspunkt von Signal- und Kontrollstrahl(en) eingestellt werden kann.

So können beispielsweise mit entsprechend diskret angeordneten optischen Detektoren, die wiederum als CCD-Zeile bzw. CCD-Array ausgebildet sein können, bestimmte Schaltfunktionen rein optisch ausgelöst werden.

Für eine gezielte Signalweiterleitung können mehrere diskret angeordnete Lichtwellenleiter eingesetzt werden, in die dann jeweils durch die entsprechende Beeinflussung des Kreuzungspunktes Licht eingekoppelt und die Übertragung von Signalen in den jeweiligen Lichtwellenleiter gezielt gewählt werden kann.

In jedem Fall kann die bereits erwähnte Verstärkung der Intensität (Leistung) des aus dem Wellenleiterarray ausgekoppelten Lichts ausgenutzt werden.

Das erfindungsgemäße optische System kann demzufolge vorteilhaft als optisches Schalt- oder Verzweigungselement, für eine optische Signalverstärkung und Signalregenerierung und zur Frequenz- und Wellenlängenkonversion eingesetzt werden, wobei solche Verwendungen auch in Kombination erreicht werden können.

Im Gegensatz zur allgemeinen Annahme, daß ausschließlich mit Kerr-Nichtlinearitäten, welche primär lediglich eine Phasenmodulation bewirken, rein photonische Elemente realisiert werden können, kann die hier vorgestellte Lösung die quasi-instantane Nichtlinearität zweiter Ordnung in nicht zentrosymmetrischen Materialien nutzen. In der Vergangenheit wurden diese lediglich zur Frequenzkonversion genutzt. Sie können aber ebenfalls zur Phasenmodulation und daraus folgend auch zur Intensitätsmodulation eingesetzt werden. Damit ist es möglich sehr vielfältige photonische Schaltfunktionen zu realisieren [G.I. Stegemann and M. Segev, Science, 286, 1518 (1999); F. Lederer, S. Darmanyan, and A. Kobyakov, "Discrete Solitons", in: Optical Solitons, eds.: S. Trillo and W. Torruellas, Springer, Berlin, 2000; A. Kobyakov, E. Schmidt, F. Lederer, J. Opt. Soc. Am. B 14, 3242 (1997)].

Die erfindungsgemäße Lösung kann die Grundlage für vielseitige Module mit komplexer Funktionalität bilden, die für opto-optisches Schalten, Weiterleiten (von N' Eingangskanälen zu auswählbaren N" Ausgangskanälen), Signalregeneration und Wellenlängenmanagement von optischen Hochratendatenströmen z.B. im Kommunikationsband (1535-1610 nm) eingesetzt werden können. Typische Signalparameter können dabei Pulslängen von einigen Picosekunden und Datenraten über 100 Gbit/s sein.

Der primäre Vorteil der χ⁽²⁾-Nichtlinearität (zweiter Ordnung, quadratisch) gegenüber der üblichen χ⁽³⁾⁻Nichtlinearität (dritter Ordnung, kubisch, Kerr) besteht in deren einzigartiger Vielseitigkeit. Sie ist Grundlage nicht nur für die Phasenmodulation, sondern auch für den Energietransfer von einem Kontrollstrahl zu einem Signalstrahl (z.B. für rauscharme Verstärkung) und falls notwendig auch für die Frequenzumsetzung in WDM-Systemen. Insbesondere in der Kombination mit Wellenleitergeometrien ist die χ⁽²⁾-Nichtlinearität damit sehr gut an die Erfordernisse moderner Netzwerkarchitekturen angepaßt. Die parametrische Verstärkung macht sich dabei besonders für die Kaskadierung transparenter Grundelemente geeignet. Darüber hinaus ermöglicht die Technik des periodischen Polens des χ⁽²⁾-Materials eine steuerbare Phasenanpassung, wodurch die Stärke und die Eigenschaften der nichtlinearen Wechselwirkung der Wellen weitreichend modifiziert werden können. Diese erhöhte Flexibilität macht χ⁽²⁾-Nichtlinearitäten zu einem wirksamen Werkzeug für die opto-optische Informationsverarbeitung, die es dem im Folgenden vorgestellten Element erlaubt, gleichzeitig eine Vielzahl von verschiedenen Aufgaben in einer einzigen kompakten Einheit auf Chip-Dimensionen zu bewältigen.

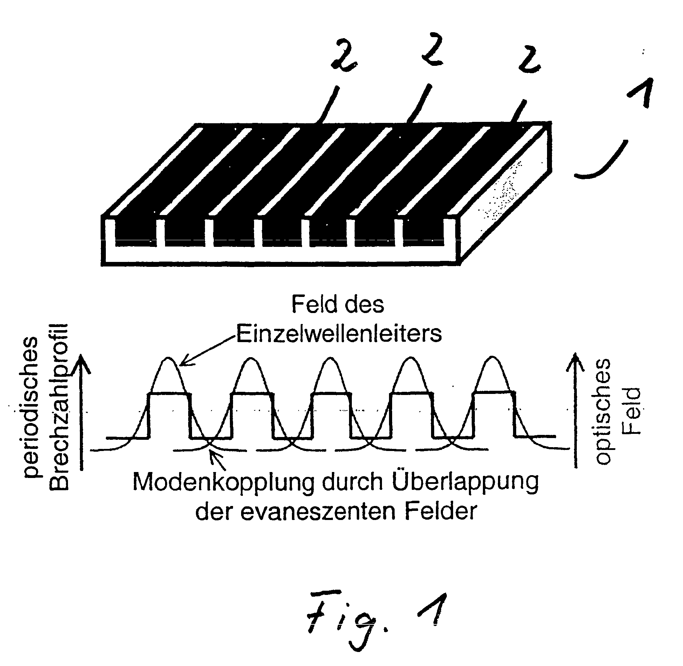

Ein weiterer innovativer Aspekt der erfindungsgemäßen Lösung ist die Nutzung einer besonderen Geometrie der linearen Brechzahlverteilung in Form eines Arrays evaneszent gekoppelter Wellenleiter entsprechend Figur 1. Diese weisen all die herausragenden Besonderheiten diskreter Systeme auf, wie z.B. das neue Konzept steuerbarer Beugung (Diffraction Management), diskrete Solitonenformation und Strahl-Trapping [A. Kobyakov, E. Schmidt, F. Lederer, J. Opt. Soc. Am. B 14, 3242 (1997; R. Morandotti et al., Phys. Rev. Lett. 81, 2726 (1999)]. Insbesondere die Kombination der besonderen linearen Eigenschaften des Wellenleiterarrays mit der Vielseitigkeit der quadratischen Nichtlinearität erlaubt es, alle für ein opto-optisches Netzwerk notwendigen Funktionen auf einem einzigen Chip zu integrieren.

Wellenleiterarrays stellen dabei quasi die natürliche Wahl für die Signalweiterleitung und -verteilung dar, da das diskrete Schaltschema von Wellenleiterarrays hervorragend an die Verteilung von Informationsflüssen auf verschiedene Kommunikationskanäle innerhalb von Netzwerkknoten angepaßt ist.

Die Erfindung kann vorteilhaft alle opto-optischen Funktionen, wie Weiterleiten, Verteilen, Schalten, Regeneration und Frequenz-/Wellenlängenkonversion erfüllen und auf einem einzigen optischen Chip ausgebildet sein.

Das Grundkonzept beruht dabei auf:
- der Ausnutzung einer quasi instantanen quadratischen Materialnichtlinearität welche verlustfrei ist (keine nichtlinearen Verluste).
- der Vielseitigkeit parametrischer Prozesse, die von der Phasenanpaßbedingung und damit von der periodischen Polung abhängen und es dadurch erlauben, die Stärke und spektralen Eigenschaften der nichtlinearen Wechselwirkung lokal zu steuern.
- der Eigenschaft quadratischer Wechselwirkungen, die die Verarbeitung schwacher Signale mit Hilfe starker Kontrollpulse erlaubt (optischparametrische Verstärkung).
- dem Gebrauch von Wellenleiterkonfigurationen, die sowohl durch die gebundenen Modenfelder zu einer Effektivierung der nichtlinearen Wechselwirkung und damit zur Reduzierung des Leistungsbedarfs führen als auch die Integration auf Chip-Dimensionen ermöglichen.
- der Nutzung von evaneszent gekoppelten Wellenleiterarrays, deren einzigartige Eigenschaften in Form definierter Phasenbeziehungen zwischen benachbarten Wellenleitern komplexe nichtlineare Schaltvorgänge ermöglichen.
- der Kaskadierbarkeit der Einzelmodule zu optischen Baugruppen.
- der Nichtuniformität der Polung der eingesetzten quadratischen nichtlinearen Materialien zur Optimierung der Schaltfunktionen und der Integrationsfähigkeit.

Wellenleiterarrays besitzen interessante Eigenschaften für die Ausbreitung optischer Felder, welche vorteilhaft für die opto-optische Signalverarbeitung ausgenutzt werden können. Eine der herausragenden Eigenschaften ist die Art und Weise, wie sich begrenzte Strahlenbündel niedriger Intensität über dem Wellenleiterarray ausbreiten. Die Strahlverbreiterung wird dabei als eine Form diskreter Beugung beschrieben, die ihre Ursache in der evaneszenten Kopplung der Einzelwellenleiter hat. Im Gegensatz zu allen kontinuierlichen Systemen, wie z.B. Filmwellenleitern, ist diese Beugung durch die Phasendifferenz benachbarter Wellenleiter steuerbar. Dadurch kann die Beugung sowohl ausgelöscht werden, als auch mit einem negativen Vorzeichen behaftet sein. In Kombination mit der parametrischen Wechselwirkung durch die quadratische Nichtlinearität können Effekte zur Strahlmanipulation und Solitonenbildung erzielt werden, die ebenfalls jeder Analogie zu kontinuierlichen Systemen entbehren. Quadratische Nichtlinearitäten besitzen auch verglichen mit kubischen Nichtlinearitäten eindeutige Vorteile, die es z.B. ermöglichen, Energie von einem starken Kontrollstrahl (zweite Harmonische bzw. Pumpwelle) zu einem schwachen Signalstrahl (Fundamental- bzw. Idlerwelle) bei einer anderen Wellenlänge zu übertragen. Beide Strahlen können nun im Array sehr verschiedene diskrete Beugungseigenschaften besitzen, z.B. kann der Kontrollstrahl auf Grund seiner kürzeren Wellenlänge eine wesentlich verringerte evaneszente Kopplung aufweisen und damit keine Beugung erfahren.

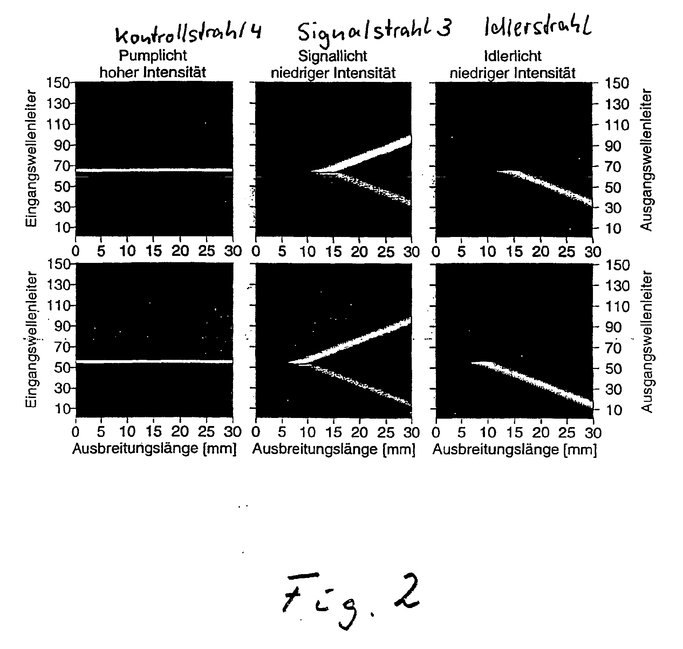

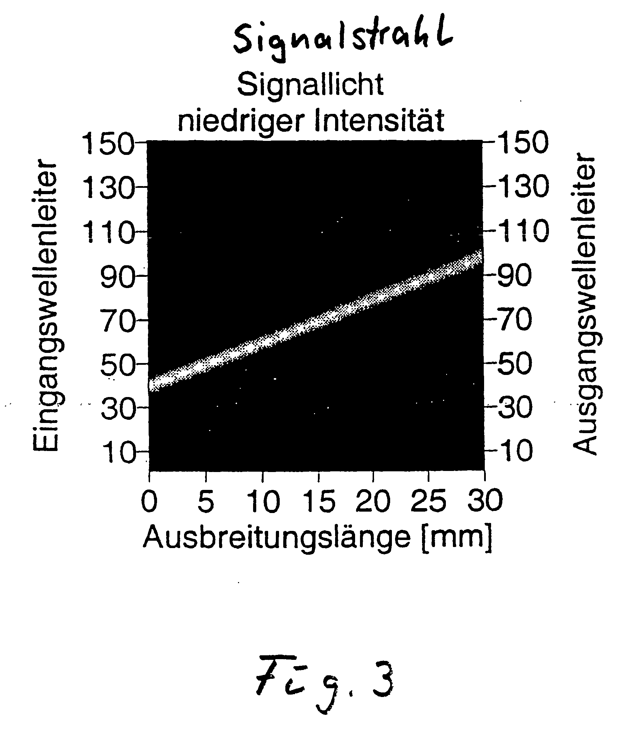

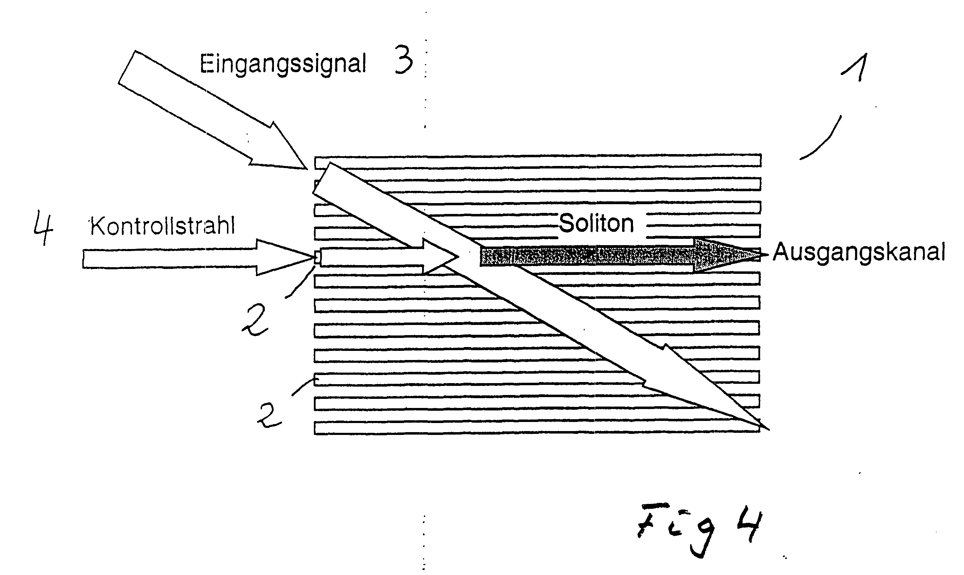

Das vorgestellte Konzept nutzt gezielt das Zusammenspiel dieser interessanten linearen und nichtlinearen Effekte in Wellenleiterarrays. Dabei können folgende Elemente realisiert werden.
1. Das erste mögliche Element nutzt die nichtlineare Wechselwirkung lediglich, um Energie zwischen verschiedenen Lichtfeldern durch parametrische Verstärkung auszutauschen. Die Eigenschaften des Elements werden deshalb durch die unterschiedlichen linearen Eigenschaften der beteiligten Felder sowie durch die Phasenbeziehung der quadratischen Wechselwirkung bestimmt. Das Verhalten des Elements wird dabei durch die Existenz und Stärke der Kontrollstrahlen bestimmt. Daraus ergibt sich insbesondere, daß die erforderlichen Schaltleistungen für diesen Elementetyp sehr gering sind. Die Kontrolleistung bestimmt lediglich den Signalpegel, wobei jedoch die Schalteigenschaften von der Kontrollstrahlleistung unbeeinflußt bleiben. Figur 2 zeigt ein solches Mehrkanal-Schaltelement, in dem ein Eingangsstrahl durch einen optischen Kontrollstrahl einem beliebigen Ausgangskanal zugewiesen werden kann. Durch die speziellen diskreten Beugungseigenschaften quert dabei der Signalstrahl das Wellenleiterarray ohne jede Beugung, da er unter einem Winkel eingekoppelt wird, der einer Phasendifferenz von Π/2 zwischen benachbarten Wellenleitern entspricht (Figur 3). Ohne anwesenden Kontrollstrahl ist die Ausgangsposition des Signalstrahls lediglich durch die Eingangsverkippung vorgegeben. Ein den Signalstrahl kreuzender Kontrollstrahl generiert am Kreuzungspunkt einen neuen Signalstrahl entgegengesetzter Verkippung, Mit mehreren Kontrollstrahlen, die an verschiedenen Positionen im Wellenleiterarray ein- bzw. ausgeschaltet werden können, sind beliebige Ausgangspositionen des Signals auswählbar. Zu bemerken ist, daß durch die Abhängigkeit der Reichweite des evaneszenten Feldes von der Wellenlänge, der kurzwellige Kontrollstrahl stärker geführt wird als der langwellige Signalstrahl und damit keine Kopplung zu seinen Nachbarwellenleitern erfährt. Folgende Eigenschaften des Systems können dabei ausgenutzt werden:
   - Die parametrische Wechselwirkung kann für eine Verstärkung des Signalstrahls ausgenutzt werden (optische parametrische Verstärkung).
   - Durch Dreiwellenwechselwirkung kann zusätzlich zur räumlichen Signalsteuerung auch die Ausgangswellenlänge in einem weiten Bereich frei gewählt werden. Figur 2 zeigt dafür zusätzlich die Ausbreitung des angeregten Idler-Strahls bei einer anderen Wellenlänge.
   - Bei Einkopplung des Kontrollstrahls in einen einzelnen Wellenleiter erfolgt eine symmetrische Aufspaltung des Idlerstrahls. Die Einkopplung des Kontrollstrahls in zwei benachbarte Wellenleiter führt entsprechend Figur 2 zur Unterdrückung des für die meisten Anwendungen unerwünschten Idlerstrahls, welcher dem linearen Signalstrahl überlagert ist.
   - Eine zeitliche Strukturierung des Kontrollstrahls kann ausgenutzt werden, um die Ausgangspulse des Signals erneut auf das Zeitraster des Übertragungssystem zu zentrieren (retiming).
   - Durch zusätzliche Dotierung der Wellenleiter mit seltenen Erden (z.B. Erbium) und die Anregung dieser Elemente mit geeigneten Quellen, kann eine zusätzliche nichtparametrische Verstärkung für den Signal- oder Kontrollstrahl eingefügt werden.
2. Die zweite Klasse von Elementen basiert auf den Eigenschaften diskreter Solitonen in quadratisch-nichtlinearen Wellenleiterarrays, wobei vorzugsweise stark lokalisierte Solitonen hoher Leistung Anwendung finden (Lokalisierung auf < 5 Wellenleiter), um möglichst viele Signalkanäle auf einem begrenzten Gebiet des Wellenleiterarrays zu realisieren. Für die Anregung dieser Solitonen muß mit wesentlich höheren Kontrollstrahlleistungen gearbeitet werden, damit an der Kreuzungsstelle von Signal- und Kontrollstrahl ein dichromatisches Soliton generiert wird, welches entsprechend Figur 4 im Wellenleiter an der Kreuzungsstelle gefangen wird. Das Ausgangssignal verläßt das Array in Form eines Solitons an der durch die Position des Kontrollstrahls bestimmten Stelle und kann wiederum beliebigen Ausgangskanälen zugewiesen werden. Vorteil dieser Konfiguration ist, daß etwaige Schwankungen des Eingangssignals (Pulsamplitude, Pulsform, Pulszeitpunkt) durch die Solitonbildung ausgeglichen werden können. Es wird damit eine 3R-Signalregeneration möglich.

Unter den verschiedenen Typen vorhandener nichtlinearer Materialien, besitzen Kristalle ohne Inversionssymmetrie eine große Suszeptibilität zweiter Ordnung, mit quasi-instanter Response, vorausgesetzt die Anregungswellenlänge ist fern der Materialresonanzen.

Eines der besten und etabliertesten quadratischnichtlinearen Materialien ist Lithiumniobat (LiNbO₃). Dieses Material findet hervorragende Verwendung in Optischen-Parametrische-Oszillatoren (OPOs), in akusto-optischen Strahlablenkern sowie als Substratmaterial für die Integrierte Optik. Insbesondere integriert-optische Modulatoren zählen dabei zu den Schlüsselelementen moderner Fasernetzwerke. Die kommerzielle Nutzung dieses Materials hat auch den Weg für dessen Einsatz in nichtlinearen Anwendungen geebnet.

Die kürzlich entwickelte Technik des periodischen Polens von Lithiumniobat (periodically poled LiNbO₃ - PPLN) ermöglicht die Phasenanpassung beliebiger Wellenlängen und die Ausnutzung hoher nichtlinearer diagonaler Tensorkomponenten, was zu einer erheblichen Reduzierung der Schaltleistungen der vorgestellten Elemente führt. Wellenleiterarrays können in LiNbO₃ durch die Eindiffusion benachbarter paralleler Titanstreifen oder durch Protonenaustausch hergestellt werden.

Für ein bei einem erfindungsgemäßen optischen System einsetzbares Wellenleiterarray können auch solche aus Kaliumtitanylphosphat (KTiOPO₄, KTP), deren Wellenleiter durch Ionenaustausch von Kalium gegen Rubidium ausgebildet sind, eingesetzt werden.

Nachfolgend soll die Erfindung beispielhaft erläutert werden.

Dabei zeigen:
- Figur 1: in schematischer Form ein Wellenleiterarray mit evaneszent gekoppelten Wellenleitern;
- Figur 2: Möglichkeiten zur gezielten Auskopplung von Licht aus einem Wellenleiterarray, wie dies beispielsweise bei einem optischen Schaltelement ausgenutzt werden kann;
- Figur 3: einen unbeeinflußt von Kontrollstrahlen beugungsfrei durch ein Wellenleiterarray geführten Signalstrahl;
- Figur 4: in schematischer Form eine Möglichkeit zur Anregung dichromatischer Solitonen und
- Figur 5: in schematischer Form ein aus Lithiumniobat mit durch eindiffundiertem Titan gebildeten Wellenleitern gebildetes Wellenleiterarray, das periodisch gepolt ist.

In Figur 1 ist in schematischer Form ein Wellenleiterarray 1, dessen parallel zueinander ausgerichtet einzelne Wellenleiter 2 evaneszent miteinander gekoppelt sind und es ist durch zusätzlich die durch Überlappung evaneszenter Felder benachbarter Wellenleiter erreichbare Modenkopplung schematisiert dargestellt.

In Figur 2 sind Möglichkeiten zur Beeinflussung der Auskoppelposition, die mit einem optischen System erreichbar sind, angedeutet.

Dabei wird ein beugungsfrei durch ein Wellenleiterarray 1 geführter Signalstrahl 3, wie er in Figur 3 unbeeinflußt von einem Kontrollstrahl 4 durch das Wellenleiterarray 1 geführt wird, mittels Kontrollstrahlen 4 gezielt ausgelenkt.

In der linken oberen Darstellung von Figur 2 ist ein einzelner Kontrollstrahl 4, der durch mindestens einen Wellenleiter 2 des Wellenleiterarrays 1 geführt wird, gezeigt. In der mittleren Darstellung, ist ausgehend vom Kreuzungspunkt vom nicht dargestelltem Signalstrahl 3 mit dem Kontrollstrahl 4 eine Verzweigung symmetrisch zum Kontrollstrahl erkennbar, wobei der in der rechten Abbildung untere abzweigende Strahl ein Idlerstrahl ist.

Bei den in der unteren Reihe von Figur 2 gezeigten drei Abbildungen wurden einmal die Position der Einkopplung von Kontrollstrahlen 4 im Gegensatz zu der in der oberen Reihe dargestellten Form verändert, so daß sich die Position des Kreuzungspunktes von Signal- und Kontrollstrahlen gegenüber den in der oberen Reihe dargestellten Abbildungen verändert und sich daraus auch eine Veränderung der Auskoppelposition ergibt. Damit kann ein optisches Schaltelement erhalten werden.

Es besteht außerdem die Möglichkeit eine Auslöschung eines Zweiges, der vom Kreuzungspunkt von Signal- und Kontrollstrahl ausgeht, zu erreichen.

Wie im allgemeinen Teil der Beschreibung bereits angesprochen, kann durch eine zusätzliche parametrische Anregung eines Idlerstrahls gleichzeitig eine Konversion des Signalstrahls auf eine neue Wellenlänge/Frequenz mit gegebenenfalls verbesserter Signal-Rauschverhältnisse und entsprechende Übersprechdämpfung erreicht werden.

Die Grundlage für die Abbildungen von Figur 2 sind dabei BPM-Berechnungen für PPLN-Wellenleiter.

In Figur 4 ist in schematischer Form angedeutet, wie mit dem erfindungsgemäßen optischen System dichromatische Solitonen an einem Kreuzungspunkt eines Signalstrahls 3 mit einem Kontrollstrahl 4 angeregt werden können, wobei die Solitonen das Wellenleiterarray 1 als Ausgangssignal durch den jeweiligen Wellenleiter 2, ausgehend vom Kreuzungspunkt der beiden Strahlen 3, 4 verlassen, so daß durch Variationen der Position des jeweiligen Kreuzungspunktes, das durch entsprechend positionierte Einkopplung eines Kontrollstrahls 4 mit ausreichend hoher Leistung ein beliebiger Ausgangskanal (Auskoppelposition) eingestellt werden kann.

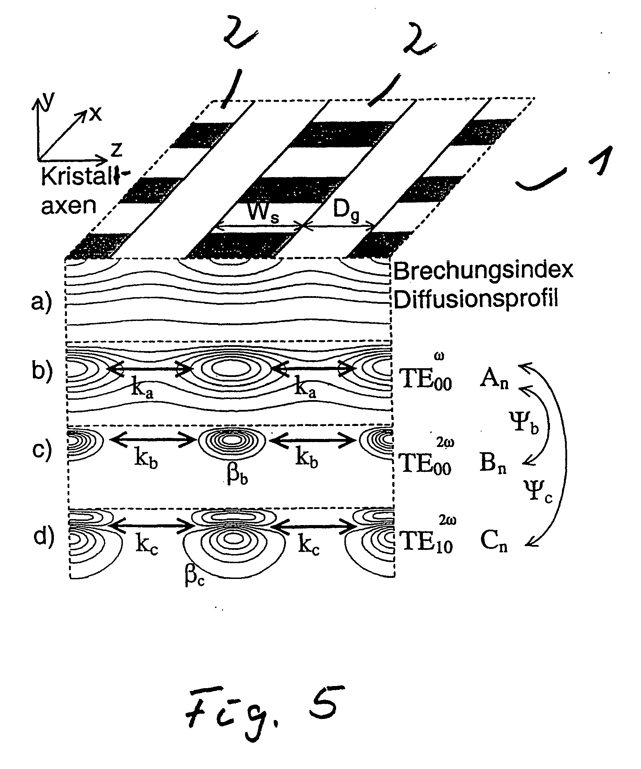

Figur 5 zeigt das berechnete Brechzahlprofil welches durch die Titaneindiffusion in z-Schnitt LiNbO₃ erzielt wird. Darunter sind die durch exakte vektorielle FEM-Methoden berechneten Lichtfelder dargestellt, die an der nichtlinearen Wechselwirkung beteiligt sind. Aus diesen Berechnungen können alle für das Bauelementedesign notwendigen Parameter für den fundamentalen Signal- und Idler*strahl* (λ ca. 1550 nm) und die zweite Harmonische Kontroll- bzw. Pump*strahls* (λ ca. 775 nm) abgeleitet werden.

Mit der in Figur 5 gewählten dreidimensionalen Form sollen im Bereich a) das durch die Titaneindiffusion ausgebildete Brechzahlprofil der einzelnen Wellenleiter 2 mit dem Bereich b) der jeweilige Grundmode der Kontrollstrahlen 4 (zweite Harmonische) mit dem Bereich c) der jeweilige Gundmode der Signalstrahlen 3 (Fundamentalwelle) und dem Bereich d) der durch evaneszente Kopplung k erreichte höhere Mode des Signalstrahls verdeutlicht werden. Dabei ist ψ der nichtlineare Wechselwirkungsquerschnitt.

## Patentansprüche

1. Verfahren zum Betreiben eines optische Systems für die opto-optische Informationsverarbeitung, bei dem in ein Wellenleiterarray (1),
bei dem die einzelnen Wellenleiter (2) evaneszent gekoppelt sind,
mindestens ein Signalstrahl (3) bekannter Wellenlänge unter einem, eine Beugung des Signalstrahls (3) beim Durchqueren des Wellenleiterarrays (1) vermeidenden Winkel und mindestens ein Kontrollstrahl (4) bekannter Wellenlänge so in das Wellenleiterarray (1) eingekoppelt werden, daß sich Signalstrahl (3) und Kontrollstrahl (4) innerhalb des Wellenleiterarrays kreuzen **dadurch gekennzeichnet, dass** die Wellenlänge des Kontrollstrahls kleiner ist als die Wellenlänge des Signalstrahls.

2. Verfahren nach Anspruch 1,
**dadurch gekennzeichnet, daß** ein Wellenleiterarray (1) aus einem quadratisch nichtlineare Material verwendet wird.

3. Verfahren nach Anspruch 2,
**dadurch gekennzeichnet, daß** ein Wellenleiterarray (1), das aus LiNbO₃, mit aus eindiffundiertem Titan oder Protonenaustausch gebildeten Wellenleitern (2) gebildet ist, verwendet wird.

4. Verfahren nach Anspruch 2 oder 3,
**dadurch gekennzeichnet, daß** das Wellenleiterarraymacerial (1) periodisch gepolt wird.

5. Verfahren nach Anspruch 1 bis 4,
**dadurch gekennzeichnet, daß** ein Signalstrahl (3) dessen Wellenlänge zweifach größer, als die Wellenlänge des Kontrollstrahls (4) ist, eingekoppelt wird.

6. Verfahren nach einem der Ansprüche 1 bis 5, **dadurch gekennzeichnet, daß** mehrere ein- und ausschaltbare Kontrollstrahlen (4) in das Wellenleiterarray (1) an verschiedenen Positionen eingekoppelt werden.

7. Verfahren nach einem der Ansprüche 1 bis 6, **dadurch gekennzeichnet, daß** ein oder mehrere Kontrollstrahlen (4) in mindestens zwei benachbarte Wellenleiter (2) des Wellenleiterarrays (1) eingekoppelt werden.

8. Verfahren nach einem der Ansprüche 1 bis 7, **dadurch gekennzeichnet, daß** der/die Kontrollstrahl (en) (4) in an das Zeitraster eines optischen Signalüberztragungssystems angepaßter Form zeitlich strukturiert wird/werden.

9. Verfahren nach einem der Ansprüche 1 bis 8, **dadurch gekennzeichnet, dass** Wellenleiterarray(s) dessen/deren Wellenleiter (2) mit einem selten Erdion dotiert sind, verwendet werden.

10. Verfahren nach einem der Ansprüche 1 bis 9, **dadurch gekennzeichnet, daß** aus den Wellenleiterarray (1) ausgekoppelte Lichtstrahlen auf diskret angeordnete optische Detektoren gerichtet oder in diskret angeordnete Lichtwellenleiter eingekoppelt werden.

11. Verfahren nach einem der Ansprüche 1 bis 10, **Dadurch gekennzeichnet, dass** eine optische Schaltung oder Verzweigung durchgeführt wird.

12. Verfahren nach einem der Ansprüche 1 bis 10, **dadurch gekennzeichnet, dass** eine optische Signalverstärkung und Signalregenierung durchgeführt wird.

13. Verfahren nach einem der Ansprüche 1 bis 10, **dadurch gekennzeichnet, dass** eine Frequenzkonversion durchgeführt wird.

## Claims

1. Method for operating an optical system for opto-optical information processing, in which in a waveguide array (1) into which the individual waveguides (2) are coupled evanescently, at least one signal beam (3) of known wavelength, at an angle avoiding diffraction of the signal beam (3) on passing through the waveguide array (1), and at least one control beam (4) of known wavelength are coupled into the waveguide array (1) so that the signal beam (3) and control beam (4) cross within the waveguide array, **characterised in that** the wavelength of the control beam is smaller than the wavelength of the signal beam.

2. Method according to claim 1, **characterised in that** a waveguide array (1) of a quadratic non-linear material is used.

3. Method according to claim 2, **characterised in that** a waveguide array (1) formed from LiNbO₃ is used with waveguides (2) formed from diffused titanium or proton exchange.

4. Method according to claim 2 or 3, **characterised in that** the waveguide array material (1) is periodically polarised.

5. Method according to claims 1 to 4, **characterised in that** a signal beam (3), the wavelength of which is twice as great as the wavelength of the control beam (4), is coupled in.

6. Method according to any one of claims 1 to 5, **characterised in that** several control beams (4) that can be switched on and off are coupled into the waveguide array (1) at different positions.

7. Method according to any one of claims 1 to 6, **characterised in that** one or more control beams (4) are coupled into at least two adjacent waveguides (2) of the waveguide array (1).

8. Method according to any one of claims 1 to 7, **characterised in that** the control beam(s) (4) is/are structured temporally in a form adapted to the timeslot pattern of an optical signal transmission system.

9. Method according to any one of claims 1 to 8, **characterised in that** waveguide array(s) are used, the waveguides (2) of which are doped with a rare earth ion.

10. Method according to any one of claims 1 to 9, **characterised in that** light beams coupled out from the waveguide array (1) are directed at discretely arranged optical detectors or coupled into discretely arranged optical waveguides.

11. Method according to any one of claims 1 to 10, **characterised in that** an optical switching or branching is performed.

12. Method according to any one of claims 1 to 10, **characterised in that** an optical signal amplification and signal regeneration are performed.

13. Method according to any one of claims 1 to 10, **characterised in that** a frequency conversion is performed.

## Revendications

1. Procédé d'actionnement d'un système optique pour le traitement d'informations opto-optique, dans lequel, dans un groupement de guides d'onde (1) dans lequel les différents guides d'onde (2) sont accouplés de manière évanescente,
au moins un faisceau de signaux (3) de longueur d'onde connue, selon un angle évitant une inclinaison du faisceau de signaux (3) lorsqu'il traverse les groupements de guides d'onde (1), et au moins un faisceau de contrôle (4) de longueur d'onde connue sont injectés dans le groupement de guides d'onde (1), de telle sorte que le faisceau de signaux (3) et le faisceau de contrôle (4) se coupent à l'intérieur des groupements de guides d'onde,
**caractérisé en ce que** la longueur d'onde du faisceau de contrôle est inférieure à la longueur d'onde du faisceau de signaux.

2. Procédé selon la revendication 1, **caractérisé en ce qu'**on utilise un groupement de guides d'onde (1) réalisé dans un matériau non linéaire quadratique.

3. Procédé selon la revendication 2, **caractérisé en ce qu'**on utilise un groupement de guides d'onde (1) qui est réalisé en LiNbO₃, et est constitué de guides d'onde (2) formés de titane diffusé ou par échange de protons.

4. Procédé selon l'une quelconque des revendications 2 ou 3, **caractérisé en ce que** le matériau du groupement de guides d'onde (1) présente une polarisation périodique.

5. Procédé selon l'une quelconque des revendications 1 à 4, **caractérisé en ce qu'**on injecte un faisceau de signaux (3) dont la longueur est égale au double de la longueur d'onde du faisceau de contrôle (4).

6. Procédé selon l'une quelconque des revendications 1 à 5, **caractérisé en ce que** plusieurs faisceaux de contrôle (4) pouvant être activés et désactivés sont injectés dans le groupement de guides d'onde (1) à différentes positions.

7. Procédé selon l'une quelconque des revendications 1 à 6, **caractérisé en ce qu'**un ou plusieurs faisceaux de contrôle (4) sont injectés dans au moins deux guides d'onde (2) voisins du groupement de guides d'onde (1).

8. Procédé selon l'une quelconque des revendications 1 à 7, **caractérisé en ce que** le / les faisceau(x) de contrôle (4) est / sont structuré(s) temporellement sous une forme adaptée au créneau horaire d'un système de transmission de signaux optique.

9. Procédé selon l'une quelconque des revendications 1 à 8, **caractérisé en ce qu'**on utilise un groupement / des groupements de guides d'onde dont le / les guides d'onde (2) sont dotés d'un ion des terres rares.

10. Procédé selon l'une quelconque des revendications 1 à 9, **caractérisé en en ce que** les faisceaux lumineux sortant du groupement de guides d'onde (1) sont orientés vers des détecteurs optiques disposés de manière discrète ou sont injectés dans des guides d'onde disposés de manière discrète.

11. Procédé selon l'une quelconque des revendications 1 à 10, **caractérisé en ce qu'**on réalise une dérivation ou un circuit optique.

12. Procédé selon l'une quelconque des revendications 1 à 10, **caractérisé en ce qu'**on réalise une amplification et une régénération de signaux.

13. Procédé selon l'une quelconque des revendications 1 à 10, **caractérisé en ce qu'**on réalise une conversion de fréquence.
